Europäisches Patentamt

European Patent Office

Office européen des brevets

(11) Publication number: **0 449 155 A2**

# EUROPEAN PATENT APPLICATION

(21) Application number: 91104609.2

(22) Date of filing: 24.03.91

(51) Int. Cl.⁵: **G01S 3/58**, H01Q 3/10

(30) Priority: **28.03.90 IT 4779890**

(43) Date of publication of application:
**02.10.91 Bulletin 91/40**

(84) Designated Contracting States:
**DE FR GB NL SE**

(71) Applicant: **SELENIA SPAZIO S.p.A.**
**via Pile, 60**
**I-67100 L'Aquila(IT)**

(72) Inventor: **Perrotta, Giorgio**
**Via Latina n.293**
**I-00179 Roma(IT)**

(74) Representative: **Gustorf, Gerhard, Dipl.-Ing.**
**Patentanwalt Dipl.-Ing. Gerhard Gustorf**
**Bachstrasse 6 A**
**W-8300 Landshut(DE)**

(54) Satellite antenna tracking system.

(57) System for the pointing of a space borne an-
tenna beam, where the pointing error sensor func-
tions, obtained by conical scan of the beam, and the
pointing error correction function are integrated and
actuated by one same device.

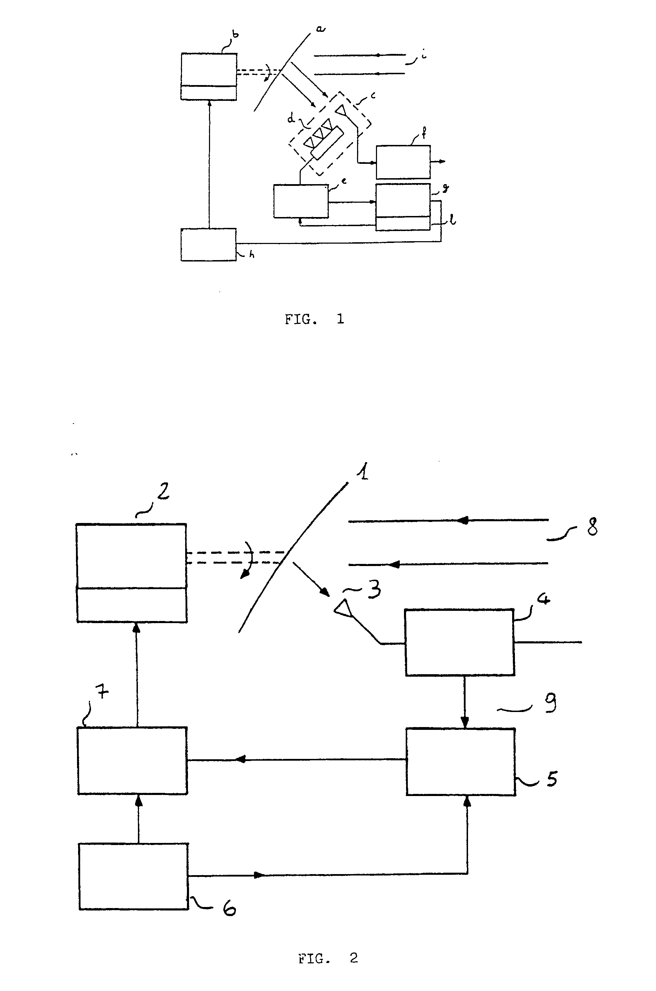

It consists basically (Fig 2) of a receiver (4), a
signal detector (5), a sinus wave generator (6) an
adder (7) and an actuator (2).

The invention has its preferred application in the
space field and it has its most obvious advantage in
weight saving, power consumption and simplification
of the electronic circuitry.

FIG. 2

EP 0 449 155 A2

The invention takes regard for a space borne antenna beam pointing system, where the pointing error sensor, obtained by conical scan of the beam, and the pointing error correction function are integrated and actuated by one same device.

The system finds an optimum application in the case radio links between satellites in geostationary orbit and/or in low circumterrestrial orbit, or between a synchronous satellite and an aircraft or mobile ground or sea borne platforms, appearing in any Earthbound field of view of the satellite have to be maintained.

The system presented in this invention has an instantaneous error sensor of the antenna beam radioelectric axis pointing based upon the mechanical scan principle well known in technical terms and widely adopted in the past for ground radars for tracking of moving targets.

In ground based systems, the sensor function and that of the antenna movement to keep track of the target are kept separate and implemented by means of functionally and phisically separate devices.

In a typical application, the antenna is of the Cassgrain type; the sensor function is achieved by means of a motor which turns the Cassrain subreflector at high speed so as to obtain a conical nutation of the antenna beam with a prefixed angle of aperture; while the moving of the entire antenna complex, which corrects the pointing error of the beam, is implemented by an other device having two degrees of freedom, generally of the elevation on azimuth type.

In the above mentioned ground applications, the phisical and functional integration of the sensor-actuator cannot be obtained easily due to the high dynamic characteristics of the target movement and /or to the inertia characteristics of the ground based antennae.

On the contrary, space borne applications are characterized by a low dynamic level of the relative motion between two satellites, or one satellite and a mobile platform between which a radio link has to be maintained; the same applies to the inertia characteristics of the on board antennae.

It is therfore feasible to integrate phisically and functionally the devices which detect the antenna beam pointing error and those for its correction if this allows reasonable savings in terms of weight and power consumption and simplifications to the electronic circuitry involved for the implementation of the functions: all these are factors of great importance in the design of a satellite.

The state of the art in on board satellite antenna beam pointing control takes into consideration exclusively systems where the instantaneous error detection of the beam radioelectric axis and the error correcting function are kept separate and trusted to different devices. Here the pointing error correction is based upon a mechanical actuator which generally has two degrees of freedom.

The sensor function is based upon the monopulse technique (borrowed from the radar field)or upon sequential lobing systems, which is a sample of the more general continuous conical scan system.

Figure 1 shows a block diagram of the main functions referred to conventional systems.
Such systems have a number of severe drawbacks, some of which are listed in the following:

1)Under utilization of the antenna movement (1) by the actuator (2);

2)high complexity of the sensor system, in particular as regards the illuminator (3) of antenna (1) which has to be designed to be compatible with the electronically scanned or with the monopulse system. This results in a sub optimized performance on the communications channel processed by the receiver (4);

3)Need for a dedicated receiver (6) for the demodulation of the error signal generated by the sensor (3), multiplated, in the time domain, by (5);

4)limited operating RF bandwidth, due to the RF forming networks (monopulse sensor) or to semiactive RF components of the sequential lobing type, inherently narrow band, in sensor (3), multiplator (5) and receiver (6). This is reflected in the practical impossibility of using these devices in multiband communications systems, unless as many devices as system operating frequency bands are implemented: with considerable impact in terms of weight, power consumption and reliability;

5) limitation in the angle acquisition field of the cooperating satellite, due to the radioelectric characteristics of the RF sensor (3) adopted (monopulse or sequential electronic scan). These characteristics are rigidly imposed by the radioelectric configuration of the system and cannot be subject to adaptive modification depending on mission variable requirements.

The system presented in this invention eliminates these drawbacks, providing at the same time, considerable savings in terms of Hardware and Software of the directive antennae operating devices, in particular with reference to the satellite to satellite and air, ship and ground vehicles links.

The invention will now be described with reference to the figures attached with illustrative non limiting purposes:

Figure 1 is the schematic diagram of a conventional system for satellite antenna steering. It shows:

a satellite antenna;
b motor/actuator;

c antenna feed;

d RF sensor;

e time multiplator;

f communications receiver;

g error signal receiver/demodulator;

h error signal processing electronics;

i RF signal transmitted by cooperating satellite;

l timer.

Figure 2 shows a schematic of the system described by this invention.

Figures 3 and 4 show two possible positions for the antenna position.

The invention will now be described with reference to Figure 2, which as we have seen, is a block diagram of the system, where the following details can be seen:

1 satellite antenna;

2 two degrees of freedom actuator;

3 antenna feed;

4 RF signal receiver;

5 detector;

A receiver output signal;

6 sinus wave generator;

7 adder circuit;

1 is the antenna on board the satellite, moved by a 2 degrees of freedom actuator; 3 is the antenna feed which can be solid with the antenna reflector; 4 is the RF signal receiver and it typically includes an input amplifier, frequency converters, gain controlled amplitude amplifiers. The AGC voltage of receiver 4 is a signal with a band between 0 and 10 Hz and is available at point A at the receiver output 4.

The antenna motor is fed at point D by adding circuit 7. It receives and adds signal C coming from the sinus generator 6 and signal B correcting the pointing angle, generated by detector 5 of the pointing angle error detector.

With no correction voltage present (B is zero), sinus signal C at very low frequency causes a conical scan with a small aperture in the antenna radioelectric beam around the axis joining the two cooperating satellites between which the radiolinck has to be made and maintained. The radiofrequency signal, transmitted by the cooperating satellite is received by 4 with a residual amplitude modulation. Due to the mechanical conical scan caused by 6, 7, 2, 1,, the signal modulation envelope will show up in A, as it is not attenuated by the automatic gain control circuit of receiver 4, which has a cut off frequency lower than the scan frequency adopted.

Error detector 5 compares the envelope modulation present on the AGC signal in A with the reference sinus signal E generated by the function generator 6 and it sets amplitude and relative phase of the error signal of the antenna radioelectric beam. The error signal, suitably filtered and normalized, is available in B at the output of the detector and it is sent to adder 7. This modifies gradually the nutation movement of the electrical axis of the beam so that the correction signal component B approaches zero. The system shown in Figure 2 offers the following advanatges compared to conventional systems typically represented by the block diagram of Figure 1:

V1)the same actuator 2 is used for the sensor (detection of the beam pointing error) and pointing error correction functions, resulting in a more efficient utilization of the hardware on board the satellite;

V2)the RF components for antenna feed and time domain multiplator are totally absent, because the error signal is uniquely associated with the residual amplitude modulation an the AGC signal available at the output of the communication receiver output 4 wich is at any rate present in the system indipendently of the implementation of an antenna pointing error system.

V3) there is no need for a receiver-demodulator of the signal dedicated to the sensor function. This togeter with the elimination of the critical RF component referred to above, has a significant impact on weight, consumption and cost reduction;

V4) the system has inherent multiband capability, limited only by the capacity of illuminator 3 and communication receiver 4 to operate on different bands. (In conventional systems, such as in Figure 1, the sensor group 3 , time multiplator 5 and receiver-demodulator 6 have inherently narrowband operational features . he system in Figure 2 can serve more than one link in time sharing. In fact, byusing the error detector 5 on a video signal at low frequency, input A can be switched on more than one receiver, serving different connections in space or in the frequency domain. This brings about considerable savings in terms of hardware in the case of multiple missions;

V5 the system can be easily made adaptive by changing (by remote control from ground or automatically on board by means of a suitable control logic not shown in figure 2) the parameters related to the mechanical scan of the antenna beam.

This, for instance, in the case of a conical scan results in an increase of the sinus voltage at the output of the function generator 6, where the amplitude of the mechanical conical scan is directly proportional to the peack value of the low frequency sinus voltage;

V6 as the error detector 5 is sensitive to the sole residual amplitude modulation of the mechanical conical scan low frequency signal received envelope as determined by the functions generator 6, it follows that the system can operate with any type of signal modulation (transmitted by the cooperating satellite or by the mobile vehicle) which does not have significant spectrum components within a narrow band around the frequency of the mechanical conical scan. In practice this means that the signal received may be for instance:

- a frequency modulated (analogue) or phase modulated (digital) signal;
- a multicarrier signal, such as FDM multiplex, with any spacing between carriers and with any modulation of each carrier (analogue or digital);
- a single side band modulated signal: (the lower end of the voice band is far higher than the mechanical conical scan frequency;
- a multi carrier signal with random access and expanded spectrum modulation.

In the following, some of the space applications which are most favoured by the implementation of the antenna pointing system presented in this invention are described:

- intersatellite connections in the centimeter and millimeter bands;
  For this type of connection, the on board antennae have reduced dimensions (from 0.5 m to 2 m) and the dynamics of the relative motion among satellites are all characterized by low angular speeds. Both such features favour the adoption of a the pointing system of this invention, where the beam is mechanically scanned conically, performed at a frequency lower than 1 Hz and is preferably in the field 0.1 to 0.5 Hz. The mecanical conical scan semiaperture angle is typically smaller than 1/10 and is preferrable between 1/20 and 1/10 of the antenna -3 dB beamwidth.

During the acquisition phase of the cooperating satellite, the mechanical conical scan semiaperture angle can be adaptively increased to values corresponding to 1/5 to 1/2 of the -3 dB beamwidth.

The preferred antenna configurations, which can be adopted in an optimum manner together with the pointing system according to this invention, are those where the feed is fixed to the satellite body and the reflecting system is configured so as to cut back, in conjunction with a suitable two degrees of freedom actuator, the gain losses caused by the beam scan within the angle sector within which the antenna must be repositioned.

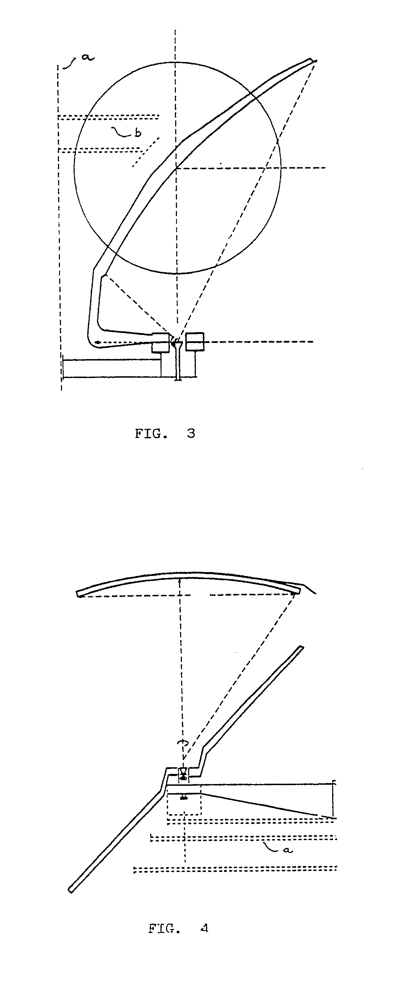

Figures 3 and 4 provide two non limiting examples of an implementation of the on board antenna which together with an actuator of the elevation on azimuth type, are best suited for the application mentioned, together with the pointing system of this invention.

- connections among satellites in synchronous orbit and mobile terminals in the centimeter and millimeter bands.
  In this type of connection the dynamics of the relative motion between satellite and mobile platform are very slight, but the effects of propagation within the transmissive means (for mobile platforms beneith the stratosphere) cause low frequency amplitude fluctuations in the signal received on board the satellite.

  In the mechanically scanned system according to this invention, it is possible to increase the scan frequency by performing the scan frequency performing a further filtering and/or integration of the error signal within the error detector 5 of the block diagram in Figure 2.

- connections between satellite in synchronous orbit and mobile/transportable terminals (ground or sea borne) in the centimeter or millimeter bands.

In this type of connections a given number of ground terminals situated within a geographic area, set satellite bilateral links between the terminals and/or a control centre. Radiotransmission by terminals may not be continuous and the same area covered by the service can become mobile due to the relocation of the terminals themselves.

The operating characteristics according to this invention, in particular the operation of the error signal detector are such that in this context, the average pointing direction of the electrical axis of the antenna lines up with the center of gravity of the transmitting terminals on the ground weighted by the relative intensity of the power of their emissions. If the terminals have the same power and there are no intentional interferers, this system feature can be of interest as it maximizes the performance of the radio link in the direction of the terminals really in operation, favouring the areas of service where there is a greater density of terminals in simultaneous operation.

The pointing system for which a patent coverage is required, is preferably used when we have to establish links between satellites in the same orbit or in different orbits or links between one satellite and an air or sea mobile platform or mobile or transportable ground stations.

## Claims

1. System for the pointing of satellite-borne antennae based upon the principle of mechanical scanning the antenna beam, where the actuator (2) of the mechanical scan is the same which provides for the movement to correct the antenna pointing.

2. System for satellite borne antennae pointing based upon the principle of mechanical scanning of the antenna beam as per claim 1, where the single actuator of the antenna movement is fed with the signal related to the mechanical can of the beam added to the signal whioh corrects the antenna pointing.

3. Antenna pointing system for satellite borne antennae based upon the principle of mechanical scanning of the antenna beam as per claims 1 amd 2, where in one of the preferred applications by the author, the mechanical scan is of the continuous conical type.

4. Satellite-borne antenna pointing system based upon mechanical scanning of the antenna beam as per claims above, where the conical scan frequency is lower than 10 Hz and is preferrably within the 0.1 to 0.5 Hz, and where the semiaperture of the nutation pattern of the beam is less than 1/10 th of the -3 dB beamwidth and is preferably between 1/20 th and 1/10 th of the beam width.

5. Satellite borne antenna pointing system based upon mechanical scanning of the antenna beam as per the claims above, where the pointing system is preferably used when connections between satellites in the same orbit or in different orbits or connections between a satellite and an air, sea or ground based platform either mobile or transportable have to be achieved.

6. Satellite borne antenna pointing system based upon the mechanical scan principle of the antenna beam as per claim 5, where during the satellite angular acquisition, or during that of the mobile cooperating platform, the semiaperture of the nutation cone of the antenna beam can be adaptively varied taking it to a value between 1/10 th and 1/2 of the -3dB antenna beamwidth.

7. Satellite borne antenna pointing system based upon the principle of mechanical scanning of the antenna beam as per claims 1 to 5, where the antenna feed (3) can be fixed to the reflector or fixed to the satellite body.

8. System for the pointing of antennae on board satellites based upon the principle of mechanical scanning the the antenna beam as per claim 7, where the satellite antenna may be implemented in any configuration (figures 3 and 4).

9. Antenna pointing system for satellite applications based upon mechanical scan of the antenna beam as per previous claims, where the operating frequency bands of the communication system, of which the antenna pointing system is part, are preferably the centimeter and millimeter bands.

FIG. 1

FIG. 2

FIG. 3

FIG. 4